(19) Europäisches Patentamt
European Patent Office
Office européen des brevets

(11) **EP 3 389 015 A1**

(12) **EUROPEAN PATENT APPLICATION**

(43) Date of publication:
**17.10.2018 Bulletin 2018/42**

(51) Int Cl.:
*G06T 7/73* (2017.01)    *B60W 40/112* (2012.01)

(21) Application number: **17166509.4**

(22) Date of filing: **13.04.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Continental Automotive GmbH
30165 Hannover (DE)**

(72) Inventors:
• **Guerreiro, Rui
Brighton, BN1 5PP (GB)**
• **Kadyrov, Alexander
Eastbourne, BN21 4UH (GB)**

(74) Representative: **Bobbert, Christiana
Conti Temic microelectronic GmbH
Patente & Lizenzen
Sieboldstrasse 19
90411 Nürnberg (DE)**

(54) **ROLL ANGLE CALIBRATION METHOD AND ROLL ANGLE CALIBRATION DEVICE**

(57)    The present invention provides a roll angle calibration method for a camera (101), the method comprising recording (S1) an image (102, 200, 300, 400) with the camera (101), extracting (S2) vertical lines (105, 201, 202, 203, 301, 302, 303, 401, 402, 403) that are vertical within a predetermined tolerance in the recorded image (102, 200), and calculating (S3) the roll angle (107) of the camera (101) based on the extracted vertical lines (105, 201, 202, 203, 301, 302, 303, 401, 402, 403). Further, the present invention provides a corresponding roll angel calibration device.

# FIG 1

EP 3 389 015 A1

**Description**

TECHNICAL FIELD

The present invention relates to a roll angle calibration method for a camera mounted on a vehicle. The axis of the roll angle is the direction of straight movement of the vehicle, it is not the roll angle of the camera regarding its optical axis as it is often understood. Therefore, herein "roll angle" is understood as an angle of rotation of the camera around the direction of straight movement of the vehicle irrespectively to the direction of the optical axis of the camera. The present invention further relates to a respective roll angle calibration device.

BACKGROUND

Although applicable in principal to any moving system that uses cameras, the present invention and its underlying problem will be hereinafter described in combination with cameras in vehicles, like e.g. automobiles.

Cameras are used in a plurality of applications, e.g. in lane departure warning systems, autonomous driving systems and the like. Since camera images provide an important part of the data base on which such systems make decisions, the correct calibration of the cameras is essential.

Calibration is the process of determining how each point in the real 3D world maps onto a 2D coordinate in the camera images. This is a crucial step that enables many algorithms to work properly in a real world scenario, in particular algorithms such as Back-Up Warning, Cross Traffic Alert, etc.

The calibration is typically divided in two parts: intrinsic and extrinsic calibration. Intrinsic calibration deals with the distortions that are caused by the optical characteristics of the camera lens. Extrinsic calibration deals with how the camera relates with the 3D world.

Because intrinsic calibration only depends on the characteristics of the lens and the camera sensor, it is usually done in the camera factory and it remains constant for the entire lifetime of the camera.

Extrinsic calibration on the other hand depends on the location of the camera in the vehicle. Further, vehicles can have different tire pressures, loads (due to a varying number of passengers and cargo being transported), etc. It is therefore necessary to repeat this calibration quick and often. And, for convenience, this calibration should take place during normal driving scenarios without forcing the driver to perform specific calibration driving maneuvers.

Against this background, the problem addressed by the present invention is providing a simple and effective camera calibration.

SUMMARY

The present invention solves this objective by a roll angle calibration method with the features of claim 1, and a roll angle calibration device with the features of claim 8, the roll angle referring to the direction of straight movement of the car.

Accordingly it is provided:

- A roll angle calibration method for a camera, the method comprising recording an image with the camera, extracting vertical lines that are vertical within a predetermined tolerance in the recorded image, and calculating the roll angle of the camera based on the extracted vertical lines. Herein we mainly use the notion of "vertical lines" in the sense of "gravitationally vertical lines".

Further, it is provided:

- A roll angle calibration device for a camera, the roll angle calibration device comprising a camera interface, which is configured to receive a recorded image from the camera, a line extractor, which is configured to extract vertical lines that are vertical within a predetermined tolerance in the recorded image, and an angle calculator, which is configured to calculate the roll angle of the camera based on the extracted vertical lines.

The present invention provides a method for calculating the roll angle of a camera. The position of a camera can be defined by six parameters. These parameters can e.g. comprise locations and angles.

Consider a camera coordinate system Oxyz which was used during the intrinsic calibration process of the camera. In such a camera coordinate system Oxyz two axes traditionaly may lie in the plane of the camera sensor. This is however not necessary, since the camera coordinate system can be any Cartesian coordinate system providing that the origin of this coordinate system (point O) is the center of projection, which is also called a no-parallax point. Moreover, it is not necessary to know how the axes are oriented or directed regarding the camera. An intrinsic calibration procedure reveals parameters that establish a correspondence between each pixel p in the image and a direction d in the Oxyz coordinate system such that each pixel p depicts a point of the 3D world that lays in the ray coming out from origin point O with direction of d, d may be considered to be a 3D vector. For each pixel p in the image a vector d is given, on the other hand for some vectors d it will not be possible to determine a corresponding pixel because the image covers only a limited viewing angle from origin point O.

The map may be defined as f: $p \rightarrow d$, that is f(p) = d, where p is a pixel and d is the corresponding vector that therefore belongs to the unit sphere S, that is f(p) = d $\in$ S.

In short, the map f is a product of the intrinsic calibration that is needed to perform the extrinsic calibration according to the present invention. In the automobile industry the intrinsic calibration procedure may e.g. be conducted at the factory, where the measured intrinsic parameters are written in a controller of the camera and the function f (which maps pixels to unit sphere S) is available as an algorithm that uses the parameters.

Further the vehicle itself when being on the road has a natural a Cartesian coordinate system with three axes. The first axis follows the direction of the road. The second axis goes from left to right or right to left. The third axis is orthogonal to the road, which is not necessarily gravitationally vertical if the road comprises a slope. The first and second axis therefore lay in the plane of the road.

Assuming the camera is rigidly mounted on the car, the three axes of the vehicle coordinate system may be presented by three vectors *X, Y* and *Z*, and all three vectors lay in a sphere S. The origin of this coordinate system may considered to be at the position of the camera, i.e. the camera coordinate in the vehicle coordinate system.

The vectors *X, Y* and *Z* in the camera coordinate system Oxyz are unknown if the exact direction of the camera regarding the road is not known. The task of extrinsic calibration, which is performed with the present invention, is equivalent to the task of determining the vectors Y and Z. X is assumed to be known, as will be described below. Further parameters that may be the subject of extrinsic calibration are not treated here.

After intrinsic calibration the function f derived from intrinsic calibration, and vectors X', Y' and Z', which are approximations to the unknown vectors X,Y and Z, are known. The angles between X and X', Y and Y', Z and Z', after mounting the camera into the predefined position will not exceed a known threshold, which is about a few degrees, typically 6 degree or 0.1 radians.

The task performed by the present invention is to determine Y and Z using visual information collected during movement of the car along the road.

The present invention assumes that the parameters from the intrinsic calibration and the vector X are known. These can e.g. be determined by respective calibration methods, which can e.g. use line segments extracted from the floor, e.g. lines drawn on a motorway, and which are not the subject of the present patent application. Just as an example, the vector X may be derived from images taken by the camera. It may be assumed that internal information on car speed and steering angle is available, so a moment can be determined when the car is moving strictly forward. In such a moment lines in the road which are parallel to the movement of the car may be detected, such lines are approximately parallel to the vector X'. The set of such vectors, collected for some time at different moments, will comprise a set L of parallel lines from which the vector X will be derived.

Therefore, the subject of this invention is to estimate Y and Z, providing that X is already known.

Since vectors X,Y,Z are orthogonal, and X is already known and given as X' initially, to estimate two other vectors Y, Z only one parameter needs to be determined, which is the rotation of the pair of vectors (Y',Z') around the axis given by vector X'. Because X' is the direction of movement of the car, this rotation parameter may also be called the "roll angle".

The present invention is based on the finding that vertical lines in the real 3D world usually point upwards with regard to "the center of the earth", and therefore are not necessarily orthogonal to the road that can lead up- or downhill. If a vehicle is e.g. going down a hill, the real world vertical lines will be pointing slightly towards the back of the vehicle. However, the lines can still be used to calculate the roll angle of the camera.

On the other hand, the road in the direction left-right (regarding the moving car) is assumed to be horizontal. Therefore, averaging in time, e.g. for a few minutes, inclination of the road in left-right direction may be ignored. However, the gradient, also called slope, of the road may not be ignored.

High speed does not allow tracing and matching objects on the road except lines which are parallel to the movement of the car due to motion blur. However, objects outside the road can be detected and analyzed, especially if they are far away.

Such out-road structures may have gravitationally vertical lines, which may e.g. be borders of human made poles, buildings, bridges, hedges and naturally grown tall trees. These lines will be gravitationally vertical since humans in there construction follow the gravitational up-down direction, and not the local terrain.

The present invention uses this knowledge to extract the vertical lines in images taken by the camera as a basis for calculating the roll angle of the camera.

Vehicles can travel at high speeds. However, despite high speeds of the vehicles, objects that are located far away have a low speed on the image or a sequence of images, i.e. a video, and thus exhibit little or no motion blur. The features needed for calibration of the camera can therefore easily be recorded at any speed. This makes calibration of the roll rate easily available at any speed and improves the accuracy of the calibration at high speed.

The present invention can be used with any camera of a vehicle. For example front, back or side cameras of vehicles can be calibrated with the help of the present invention.

With the lines extracted from the recorded image, it is then possible to calculate the roll angle of the camera and therefore provide an exact calibration of the camera.

Further embodiments of the present invention are subject of the further subclaims and of the following description, referring to the drawings.

In a possible embodiment, the roll angle calibration method can further comprise correcting the recorded image such that straight parallel lines in the 3D world become straight and parallel, e.g. within a predetermined tolerance, in the recoded image. Usually, vehicle cameras use fish eye-like lenses to capture a bigger section of the vehicle's surroundings. With such cameras the recorded images will be heavily distorted or warped and capture up to a 180° view angle. With the step of correcting the recorded images, they become available as a basis for calibrating the roll angle of the camera. The correction of the recorded image can also take into account an estimate of the roll angle if it is available, such that vertical lines in the real 3D world are approximately vertical in the corrected image as well.

In a possible embodiment, the roll angle calibration method can further comprise filtering relevant extracted vertical lines prior to calculating the roll angle. Filtering the extracted vertical lines allows discarding poor candidates for lines that help calculating the roll angle of the camera and emphasizing the relevance of the adequate candidates.

In a possible embodiment, filtering can comprise using only extracted vertical lines, which are longer than a predetermined length threshold, and/or which lay within a predetermined angle of an approximated roll angle determined by an intrinsic calibration of the camera. Large objects like e.g. houses or light poles are usually the highest objects alongside a road and at the same time are the most vertical objects, as e.g. compared to short vertical line segments on vehicles. Filtering for lines of a predetermined minimum length therefore selects the most appropriate lines in the image for calibrating the roll angle of a camera.

If only extracted lines are used, which lay within a predetermined angle of an approximated roll angle determined by an intrinsic calibration of the camera, especially in combination with the length filter, the chances are very high that only building walls and poles or other vertical objects are actually classified as vertical lines for calculating the roll angle.

In a possible embodiment, filtering can comprise using only extracted vertical lines, which are detected at least in part in a specific region of the recorded image, especially in an upper region, the upper region especially starting from a horizon, which is detected in the image. Objects that are aligned vertically such as, e.g., light poles, building facades, etc. are usually located in the upper part of the image. Therefore more weight should be given to line segments extracted in this specific section of the image, including, e.g., discarding line segments extracted below the horizon line. The horizon line can e.g. be detected with image recognition techniques.

In a possible embodiment, calculating the roll angle may comprise calculating based on the extracted vertical lines a gravitational upward vector, G(t).

The extracted vertical lines may be considered as a set L of parallel lines in the real world that are seen by the camera at a particular moment. Pixels of a line 11 are e.g. mapped by a mapping function f to the direction vectors that start at the origin point O of the camera coordinate system and point to locations on the line 11, therefore all those vectors are in a plane P1 that is defined by origin point O and the line 11.

For several parallel lines 11, 12, etc. the corresponding planes P1, P2, etc. all intersect along a line passing through O with a direction vector s which is defined by set L.

In other words, the direction vector s is parallel to all the parallel lines in set L. The purpose of introducing the direction vector s is that it can be easily computed. Supposing that line 11 is given by two pixels p1 and q1 in the image and line 12 is represented by two pixels p2 and q2 in the image, then vector s can be computed as

$$N1 = f(p1) \times f(q1), \quad N2 = f(p2) \times f(q2);$$

$$V = N1 \times N2,$$

$$s = V / norm(V)$$

Applying the above explanation to the extracted vertical lines, therefore allows computing the gravitational upward vector, G(t) as vector s if a least two vertical lines can be extracted from the camera image.

For many lines we can compute many normal vectors as Nk = f (pk) x f (qk), (k=1,2,..) which are normal to the planes Pk (k=1,2,..), and then we can find a unit vector s which is (approximately) orthogonal to all the normal vectors by means of regression methods or singular value decomposition.

In a possible embodiment, calculating the roll angle may further comprise calculating the roll angle based on the gravitational upward vector, G(t), and a predetermined vector, X, that denotes the vehicle's axis of moving forward. As explained above, the present invention assumes that the vector X is known or is calculated before applying the calibration according to the present invention.

For time t, e.g. for one camera image taken at time t, the gravitationally upward direction may be defined by the gravitational upward vector, G(t), in the camera coordinate system Oxyz.

Assuming that the gravitational upward vector, G(t), is known, if the road has no gradient, then G(t) = Z. If the road has gradient along the road, but has no gradient form left to right, which is our assumption, then G(t) is approximately equal to Z and Z' at least with an approximation of some degrees.

The gravitational upward vector, G(t), is therefore orthogonal to the unknown vector Y, and therefore lies in the plane defined by known vector X and unknown vector Z. Therefore, knowing vector X and G(t) the sought vectors Y and Z may be computed as

$$Y = (G(t) \times X) \,/\, norm(\, G(t) \times X\, ),$$

$$Z = X \times Y$$

It is understood that features of the present invention can be provided as hardware, software or any combination of hardware and software. The method according to the present invention can e.g. be implemented in a computer program or computer readable instructions. Such a program or instructions can e.g. be executed on a dedicated hardware or as a program on a control unit, which is e.g. already provided in the vehicle by another system.

BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Fig. 1    shows a flow diagram of an embodiment of a method according to the present invention;

Fig. 2    shows a flow diagram of another embodiment of a method according to the present invention;

Fig. 3    shows a block diagram of an embodiment of a device according to the present invention;

Fig. 4    shows an image taken with a camera;

Fig. 5    shows a corrected image according to an embodiment of the present invention; and

Fig. 6    shows the corrected image of Fig. 5 with extracted lines according to an embodiment of the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

DETAILED DESCRIPTION OF THE DRAWINGS

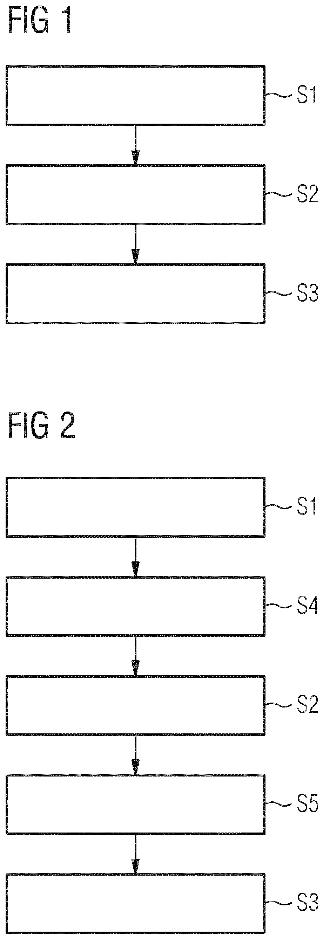

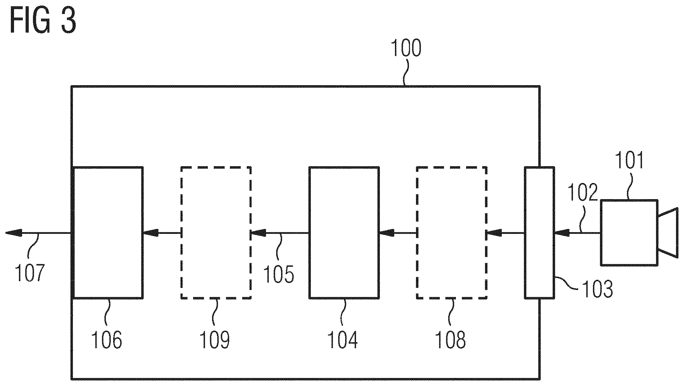

For ease of understanding, the reference signs used to explain the device of Fig. 3 will also be used throughout the description of the method in Figs. 1 and 2.

Fig. 1 shows a flow diagram of an embodiment of a roll angle calibration method for a camera 101.

The method comprises recording S1 an image 102, 200, 300, 400 with the camera 101. This can be performed e.g. with a camera 101 in a vehicle, especially a camera 101 of a surround view system in the vehicle.

Vertical lines 105, 201, 202, 203, 301, 302, 303, 401, 402, 403 that are vertical within a predetermined tolerance are extracted S2 from the recorded image 102, 200. Finally, the roll angle 107 of the camera 101 is calculated S3 based on the extracted vertical lines 105, 201, 202, 203, 301, 302, 303, 401, 402, 403.

The predetermined tolerance may e.g. be based on a vertical direction that is acquired through intrinsic calibration and a predetermined deviation angle of e.g. 0° to 6°.

Calculating S3 the roll angle 107 can e.g. calculating based on the extracted vertical lines 105, 201, 202, 203, 301, 302, 303, 401, 402, 403 a gravitational upward vector, G(t), as described above.

Calculating S3 the roll angle 107 can further comprise calculating the roll angle 107 based on the gravitational upward vector, G(t), and a predetermined vector that denotes the vehicle's axis X, as described above.

Fig. 2 shows a flow diagram of another roll angle calibration method for a camera 101. The method of Fig. 2 is based on the method of Fig. 1 introduces the steps S4 and S5.

After recording S1 an image 102, 200, 300, 400 the recorded image 102, 200, 300, 400 can be corrected S4 such that straight parallel lines in the 3D world become straight and parallel in the recoded image 102, 200. This is especially helpful when using a camera 101 that records distorted images, e.g. with a fish-eye lens.

Further, after extracting S2 the vertical lines 105, 201, 202, 203, 301, 302, 303, 401, 402, 403, the vertical lines 105, 201, 202, 203, 301, 302, 303, 401, 402, 403 can be filtered prior to calculating S3 the roll angle 107.

Filtering S5 can e.g. comprise using only extracted vertical lines 105, 201, 202, 203, 301, 302, 303, 401, 402, 403, which are longer than a predetermined length threshold. Further, e.g. only vertical lines 105, 201, 202, 203, 301, 302, 303, 401, 402, 403 can be used, which lay within a predetermined angle of an approximated roll angle determined by an intrinsic calibration of the camera 101.

Filtering S5 can also comprise using only extracted vertical lines 105, 201, 202, 203, 301, 302, 303, 401, 402, 403, which are detected at least in part in a specific region of the recorded image 102, 200. Such a region can e.g. be an upper region of the image 102, 200, especially the upper region starting from a horizon, which is detected in the image 102, 200.

Fig. 3 shows a block diagram of roll angle calibration device 100 for a camera 101. The roll angle calibration device 100 comprises a camera interface 103, which is coupled to the camera 101. The camera interface 103 is further coupled to a line extractor 104, which is coupled to an angle calculator 106. Optionally, an image corrector 108 (shown in dashed lines) can be placed between the camera interface 103 and the line extractor 104. Further optionally, a filter 109 (shown in dashed lines) can be placed between the line extractor 104 and the angle calculator 106.

The camera interface 103 can receive a recorded image 102 or stream of images, i.e. a video, from the camera 101. The image 102 is then processed by the line extractor 104, which is configured to extract vertical lines 105 that are vertical within a predetermined tolerance in the recorded image 102, 200. The following angle calculator 106 then calculates the roll angle 107 of the camera 101 based on the extracted vertical lines 105.

The angle calculator 106 can e.g. calculate based on the extracted vertical lines 105, 201, 202, 203, 301, 302, 303, 401, 402, 403 a gravitational upward vector, G(t). The angle calculator 106 can further calculate the roll angle 107 based on the gravitational upward vector, G(t), and a predetermined vector X that denotes the vehicle's longitudinal axis, as already explained above.

Especially with cameras 101 that produce distorted or warped images 102, the image corrector 108 can be used to correct the recorded image 102 such that straight parallel lines in the 3D world become straight and parallel in the recoded image 102, 200, i.e. to unwrap or un-distort the image 102.

To select only the most appropriate detected vertical lines 105 the filter 109 can filter relevant extracted vertical lines 105 prior to calculating the roll angle 107. The filter 109 can e.g. use, i.e. forward for further processing, only extracted vertical lines 105, which are longer than a predetermined length threshold, and/or which lay within a predetermined angle of an approximated roll angle or an approximated upward or vertical vector Z' determined by an intrinsic calibration of the camera 101.

The filter 109 can also use only extracted vertical lines 105, which are detected at least in part in a specific region of the recorded image 102, especially in an upper region, the upper region especially starting from a horizon, which is detected in the image 102.

It is understood, that the method steps and the elements of the roll angle calibration device described above can be applied to a single image or consecutively to a sequence of images, i.e. a video. It is further understood, that the method steps and the elements of the roll angle calibration device described above can be implemented e.g. in hardware

or software or any combination thereof.

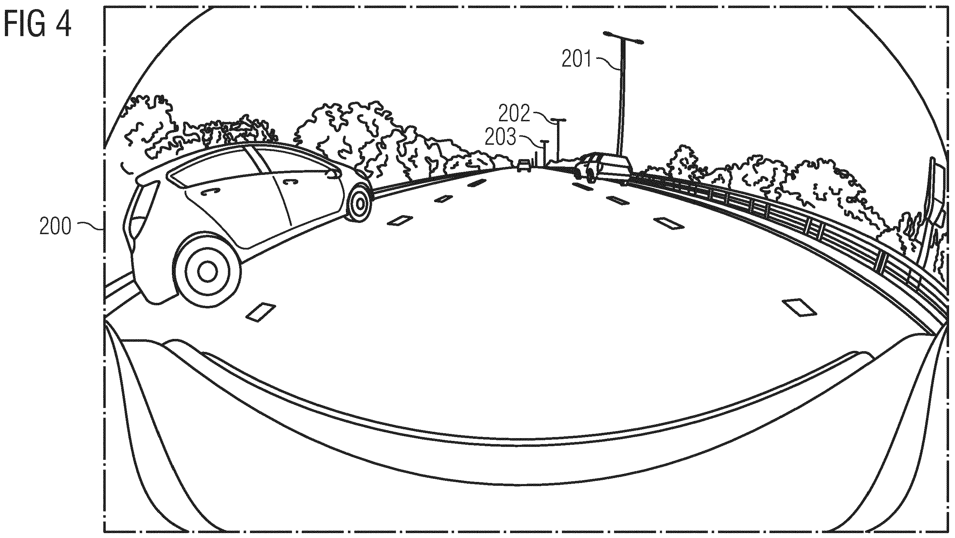

**[0071]** Fig. 4 shows an image 200 taken with a fish-eye camera. It can be seen, that the image is warped or distorted in a sphere shape by the fish-eye lens of the camera. The image shows a road where three lamp poles 201, 202, 203 can be seen on the right. It can be seen, that the lamp poles 201, 202, 203, which in reality are straight vertical lines, are slightly distorted, i.e. rounded or bent to the outside, by the fish-eye effect.

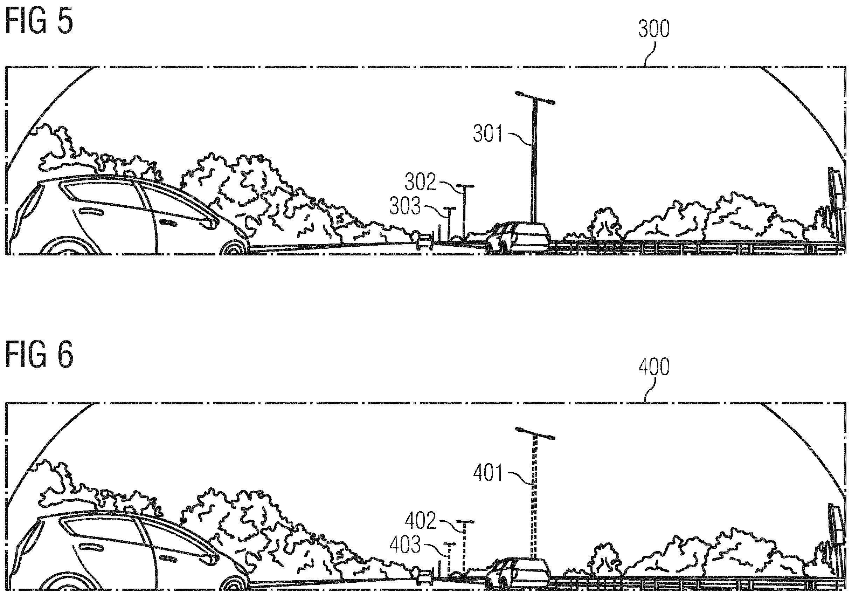

**[0072]** Fig. 5 shows a corrected image 300, which is based on the image 200 and is corrected to remove the distortion from image 200. It can be seen, that the posts at the right side of the street are now straight, and almost vertical lines 301, 302, 303.

**[0073]** Fig. 6 shows a corrected image 400, which is based on the image 300 of Fig. 5. In the image 400 the extracted lines 401, 402, 403 are marked e.g. by the step S2 of extracting vertical lines or the line extractor.

**[0074]** Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

**[0075]** Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

List of reference signs

**[0076]**

| | |
|---|---|
| 100 | roll angle calibration device |
| 101 | camera |
| 102 | image |
| 103 | camera interface |
| 104 | line extractor |
| 105 | vertical lines |
| 106 | angle calculator |
| 107 | roll angle |
| 108 | image corrector |
| 109 | filter |

| | |
|---|---|
| 200 | image |
| 201, 202, 203 | vertical lines |
| 300 | corrected image |
| 301, 302, 303 | vertical lines |
| 400 | corrected image |
| 401, 402, 403 | vertical lines |

| | |
|---|---|
| S1 - S5 | method steps |

## Claims

1. Roll angle calibration method for a camera (101), the method comprising:

recording (S1) an image (102, 200, 300, 400) with the camera (101),
extracting (S2) vertical lines (105, 201, 202, 203, 301, 302, 303, 401, 402, 403) that are vertical within a predetermined tolerance in the recorded image (102, 200), and
calculating (S3) the roll angle (107) of the camera (101) based on the extracted vertical lines (105, 201, 202, 203, 301, 302, 303, 401, 402, 403).

2. Roll angle calibration method according to claim 1, further comprising correcting (S4) the recorded image (102, 200, 300, 400) such that straight parallel lines in the 3D world become straight and parallel in the recoded image (102, 200).

3. Roll angle calibration method according to any one of the preceding claims, further comprising filtering (S5) relevant extracted vertical lines (105, 201, 202, 203, 301, 302, 303, 401, 402, 403) prior to calculating (S3) the roll angle (107).

4. Roll angle calibration method according to claim 3, wherein filtering (S5) comprises using only extracted vertical lines (105, 201, 202, 203, 301, 302, 303, 401, 402, 403), which are longer than a predetermined length threshold, and/or which lay within a predetermined angle of an approximated roll angle determined by an intrinsic calibration of the camera (101).

5. Roll angle calibration method according to any one of claims 3 and 4, wherein filtering (S5) comprises using only extracted vertical lines (105, 201, 202, 203, 301, 302, 303, 401, 402, 403), which are detected at least in part in a specific region of the recorded image (102, 200), especially in an upper region, the upper region especially starting from a horizon, which is detected in the image (102, 200).

6. Roll angle calibration method according to any one of the preceding claims, wherein calculating the roll angle (107) comprises calculating based on the extracted vertical lines (105, 201, 202, 203, 301, 302, 303, 401, 402, 403) a gravitational upward vector, G(t).

7. Roll angle calibration method according to claim 6, wherein calculating the roll angle (107) further comprises calculating the roll angle (107) based on the gravitational upward vector, G(t), and a predetermined vector that denotes the vehicle's longitudinal axis.

8. Roll angle calibration device (100) for a camera (101), the roll angle calibration device (100) comprising:

   a camera interface (103), which is configured to receive a recorded image (102, 200, 300, 400) from the camera (101),
   a line extractor (104), which is configured to extract vertical lines (105, 201, 202, 203, 301, 302, 303, 401, 402, 403) that are vertical within a predetermined tolerance in the recorded image (102, 200), and
   an angle calculator (106), which is configured to calculate the roll angle (107) of the camera (101) based on the extracted vertical lines (105, 201, 202, 203, 301, 302, 303, 401, 402, 403).

9. Roll angle calibration device (100) according to claim 8, further comprising an image corrector (108), which is configured to correct the recorded image (102, 200, 300, 400) such that straight parallel lines in the 3D world become straight and parallel in the recoded image (102, 200).

10. Roll angle calibration device (100) according to any one of the preceding claims 8 and 9, further comprising a filter (109), which is configured to filter relevant extracted vertical lines (105, 201, 202, 203, 301, 302, 303, 401, 402, 403) prior to calculating the roll angle (107).

11. Roll angle calibration device (100) according to claim 10, wherein the filter (109) is configured to use only extracted vertical lines (105, 201, 202, 203, 301, 302, 303, 401, 402, 403), which are longer than a predetermined length threshold, and/or which lay within a predetermined angle of an approximated roll angle determined by an intrinsic calibration of the camera (101).

12. Roll angle calibration device (100) according to any one of claims 10 and 11, wherein the filter (109) is configured to use only extracted vertical lines (105, 201, 202, 203, 301, 302, 303, 401, 402, 403), which are detected at least in part in a specific region of the recorded image (102, 200), especially in an upper region, the upper region especially starting from a horizon, which is detected in the image (102, 200).

13. Roll angle calibration device (100) according to any one of the preceding claims 8 to 12, wherein the angle calculator (106) is configured to calculate based on the extracted vertical lines (105, 201, 202, 203, 301, 302, 303, 401, 402, 403) a gravitational upward vector, G(t).

14. Roll angle calibration device (100) according to claim 13, wherein the angle calculator (106) is configured calculate the roll angle (107) based on the gravitational upward vector, G(t), and a predetermined vector that denotes the vehicle's longitudinal axis.

## FIG 1

S1

S2

S3

## FIG 2

S1

S4

S2

S5

S3

FIG 3

FIG 4

201

202
203

200

FIG 5

300

301

302
303

FIG 6

400

401

402
403

EP 3 389 015 A1

Europäisches
Patentamt

European
Patent Office

Office européen
des brevets

**EUROPEAN SEARCH REPORT**

Application Number

EP 17 16 6509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MYUNG HWANGBO ET AL: "Visual-inertial UAV attitude estimation using urban scene regularities", ROBOTICS AND AUTOMATION (ICRA), 2011 IEEE INTERNATIONAL CONFERENCE ON, IEEE, 9 May 2011 (2011-05-09), pages 2451-2458, XP032033419, DOI: 10.1109/ICRA.2011.5979542 ISBN: 978-1-61284-386-5 * abstract; figures 1,3,11 * * page 2451, right-hand column, paragraph 1 * * sections III.A, III.B, V.A, V.B * | 1-14 | INV. G06T7/73 B60W40/112 |
| X | US 2016/037032 A1 (IWAMA HARUYUKI [JP]) 4 February 2016 (2016-02-04) * paragraphs [0033], [0052] - [0056], [0065]; figures 5,8 * | 1-14 | |
| X | EP 2 927 870 A1 (PANASONIC IP MAN CO LTD [JP]) 7 October 2015 (2015-10-07) * paragraphs [0019] - [0029]; figures 2,5 * | 1-14 | TECHNICAL FIELDS SEARCHED (IPC) G06T B60W |
| X | DE 10 2011 079886 A1 (BOSCH GMBH ROBERT [DE]) 31 January 2013 (2013-01-31) * paragraphs [0008], [0009], [0011], [0014], [0016], [1933] - [0037] * | 1-14 | |
| X | DE 10 2014 218075 A1 (HONDA MOTOR CO LTD [JP]) 26 March 2015 (2015-03-26) * abstract; figures 5,10,11 * | 1-14 | |

-/--

The present search report has been drawn up for all claims

| Place of search | Date of completion of the search | Examiner |
|---|---|---|
| Munich | 20 June 2017 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 17 16 6509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MICHAEL HODLMOSER ET AL: "Camera auto-calibration using pedestrians and zebra-crossings", COMPUTER VISION WORKSHOPS (ICCV WORKSHOPS), 2011 IEEE INTERNATIONAL CONFERENCE ON, IEEE, 6 November 2011 (2011-11-06), pages 1697-1704, XP032095451, DOI: 10.1109/ICCVW.2011.6130454 ISBN: 978-1-4673-0062-9 * sections 3.2 and 3.5; figure 4 * | 1-14 | |

-----

TECHNICAL FIELDS
SEARCHED      (IPC)

The present search report has been drawn up for all claims

| Place of search | Date of completion of the search | Examiner |
|---|---|---|
| Munich | 20 June 2017 | Krawczyk, Grzegorz |

EPO FORM 1503 03.82 (P04C01)

page 2 of 2

## ANNEX TO THE EUROPEAN SEARCH REPORT
## ON EUROPEAN PATENT APPLICATION NO.

EP 17 16 6509

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2017

| Patent document cited in search report | Publication date | Patent family member(s) | Publication date |
|---|---|---|---|
| US 2016037032 A1 | 04-02-2016 | JP 2016030554 A<br>US 2016037032 A1 | 07-03-2016<br>04-02-2016 |
| EP 2927870 A1 | 07-10-2015 | EP 2927870 A1<br>JP 2015198374 A<br>US 2015287197 A1 | 07-10-2015<br>09-11-2015<br>08-10-2015 |
| DE 102011079886 A1 | 31-01-2013 | CN 103688138 A<br>DE 102011079886 A1<br>EP 2737282 A1<br>KR 20140051915 A<br>WO 2013013978 A1 | 26-03-2014<br>31-01-2013<br>04-06-2014<br>02-05-2014<br>31-01-2013 |
| DE 102014218075 A1 | 26-03-2015 | DE 102014218075 A1<br>JP 5947268 B2<br>JP 2015058915 A | 26-03-2015<br>06-07-2016<br>30-03-2015 |

EPO FORM P0459

For more details about this annex : see Official Journal of the European Patent Office, No. 12/82